(19) Europäisches Patentamt
European Patent Office
Office européen des brevets

(11) **EP 2 135 067 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(21) Anmeldenummer: 07723335.1

(22) Anmeldetag: **16.03.2007**

(51) Int Cl.:
*G01N 29/024* *(2006.01)*      *G01N 29/028* *(2006.01)*
*G01N 29/34* *(2006.01)*       *G01N 29/44* *(2006.01)*
*G01N 29/46* *(2006.01)*       *G01F 1/66* *(2006.01)*
*G01N 9/24* *(2006.01)*

(86) Internationale Anmeldenummer:
**PCT/EP2007/002357**

(87) Internationale Veröffentlichungsnummer:
**WO 2008/113374 (25.09.2008 Gazette 2008/39)**

(54) **Verfahren und Vorrichtung zur akustischen Bestimmung eines Dichteprofils**

Method and device for acoustic determination of a density profile

Procédé et dispositif de détermination acoustique d'un profil de densité

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**23.12.2009 Patentblatt 2009/52**

(73) Patentinhaber: **Siemens Aktiengesellschaft 80333 München (DE)**

(72) Erfinder:
• **SCHÄFER, Robert**
  **39114 Magdeburg (DE)**
• **ENS, Wolfgang**
  **76351 Linkenheim (DE)**
• **HAUPTMANN, Peter**
  **39326 Hermsdorf (DE)**
• **BETTENHAUSEN, Kurt Dirk**
  **65474 Bischofsheim (DE)**
• **GRIEB, Herbert**
  **76316 Malsch (DE)**

(56) Entgegenhaltungen:
**WO-A-2006/128913      DE-C1- 10 108 167
US-A- 4 193 291**

• **ANTHONY P LYONS ET AL: "The Effect of a Layer of Varying Density on High-Frequency Reflection, Forward Loss, and Backscatter" IEEE JOURNAL OF OCEANIC ENGINEERING, IEEE SERVICE CENTER, PISCATAWAY, NJ, US, Bd. 23, Nr. 4, Oktober 1998 (1998-10), XP011042447 ISSN: 0364-9059**

**Beschreibung**

Die Erfindung betrifft ein Verfahren und eine korrespondierende Vorrichtung zur Bestimmung eines Dichteprofils eines in einem Volumen, insbesondere Röhre, Tank oder dergleichen, befindlichen Mediums, z.B. eines Gases oder einer Flüssigkeit.

Verfahren und Vorrichtungen zur Dichtemessung sind an sich bekannt. Allerdings muss die Dichte von Stoffen (Medien) in einem Volumen der oben genannten Art nicht über den gesamten Bereich/Querschnitt konstant sein. So kann sich beispielsweise in Reaktoren bei Reaktionen eine nichthomogene Verteilung einstellen. Speziell in Rohrleitungen liegt infolge von Temperaturunterschieden zwischen Medium und Rohrwand eine ortsabhängige, d.h. vom Abstand zur Rohrwand abhängige, Dichteverteilung vor. Bei einer punktuellen Messung zur Bestimmung der Dichte im jeweiligen Volumen unter Annahme einer homogenen Dichteverteilung wird somit ein Messfehler eingeführt.

Aus der WO 2006/128913 A1 ist bereits ein Verfahren zur Messung der spezifischen Dichte eines gasförmigen oder flüssigen Mediums bekannt, wobei durch einen Sendewandler ein pulsförmiges Ultraschallsignal in das Messmedium eingekoppelt wird, wobei das Signal nach Durchlaufen einer Messstrecke durch einen Empfangswandler detektiert wird, wobei die akustische Impedanz Z durch Vergleich eines aktuell gemessenen Verlaufs des Empfangssignals mit Referenzverläufen, die für verschiedene Werte der akustischen Impedanz vorbestimmt und den jeweiligen Werten der akustischen Impedanz zugeordnet hinterlegt sind, in einer Auswerteeinrichtung automatisch ermittelt wird, wobei die Ausbreitungsgeschwindigkeit c des akustischen Signals im Medium bestimmt wird und wobei die Dichte $\rho$ des Mediums berechnet wird als der Quotient aus der akustischen Impedanz Z und der Ausbreitungsgeschwindigkeit c. Da nicht ein einzelner Parameter, wie beispielsweise die Amplitude, sondern ein zeitlicher Teilbereich des gemessenen Verlaufs des Empfangssignals zur Ermittlung der Dichte herangezogen wird, steht mehr Signalinformation zur Verfügung und es ist die in der Signalform enthaltene Dichteinformation extrahierbar. Eine Bestimmung einer lokalen Dichte oder eines Dichteprofils eines in einem Volumen befindlichen Mediums werden jedoch nicht beschrieben.

In der DE 101 08 167 CI ist bereits ein Verfahren zur akustischen Bestimmung der Dichte, der adiabatischen Kompressibilität und der Stabilitätsfrequenz in Gewässern mittels eines Ultraschall-Dichtesensors offenbart.

In der US-PS 4 193 291 ist ein Ultraschall-Dichtemessgerät mit einer Wandleranordnung beschrieben, welche Torsionswellen aussendet und empfängt, die in einem sich in axialer Richtung erstreckenden Sensor geführt werden. Der Sensor hat einen rechteckförmigen Querschnitt, der in Segmente unterteilt ist, damit Dichteprofile erfasst werden können.

Aus dem Aufsatz "The Effect of a Layer of Varying Density on High-Frequency Reflection, Forward Loss, and Backscatter" von Anthony P. Lyons and Thomas H. Orsi, IEEE Journal of Oceanic Engineering, Vol. 23, No. 4, October 1998, Seiten 411 bis 422 ist bekannt, Dichteprofile des Meeresbodens mit reflektierten akustischen Wellen zu bestimmen.

Eine Aufgabe der Erfindung besteht entsprechend darin, ein Verfahren sowie eine nach dem Verfahren arbeitende Vorrichtung anzugeben, mit der auch die Bestimmung von Dichteprofilen, d.h. die Ermittlung von ortsabhängigen Einzelwerten für die Dichte des jeweiligen Mediums am jeweiligen Ort, möglich ist.

Diese Aufgabe wird erfindungsgemäß mit einem Verfahren mit den Merkmalen des Anspruchs 1 gelöst. Danach sind zur Bestimmung eines Dichteprofils eines in einem Volumen befindlichen Mediums folgende Schritte vorgesehen: Zunächst wird als Signal ein Ultraschallimpuls definierter Bandbreite durch das Medium gesendet. Das Signal wird in an sich bekannter Art und Weise durch das Medium beeinflusst.

Dabei ändert sich aufgrund an sich bekannter physikalischer Gesetzmäßigkeiten die spektrale Zusammensetzung des Signals zumindest mit einer lokalen Änderung einer Dichte des Mediums. Das durch das Medium beeinflusste Signal kann empfangen und eine danach ermittelte spektrale Zusammensetzung der akustischen Impedanz des Mediums kann ausgewertet werden. Die lokale Dichte des Mediums ergibt sich dabei als Quotient zweier frequenz- und ortsabhängiger Größen, nämlich einer akustischen Impedanz und der Schallgeschwindigkeit. Das Dichteprofil ergibt sich als die Gesamtheit der ermittelten lokalen Dichten. Die gemäß der vorliegenden Erfindung vorgeschlagene Lösung nutzt entsprechend die Abhängigkeit der spektralen Zusammensetzung des transmittierten Impulses von der örtlichen Verteilung der akustischen Impedanz und der Schallgeschwindigkeit.

Der Vorteil der Erfindung besteht darin, dass unter Zugrundelegung der nunmehr aufgrund von Messungen und nachfolgenden Berechnungen zur Verfügung stehenden Dichteprofilen eine genauere Erfassung der Dichte und damit der Masse des in dem jeweiligen Volumen vorgehaltenen oder des durch das Volumen strömenden Mediums möglich ist. Aufbauend auf dem Ansatz gemäß der Erfindung ist eine verbesserte Durchflussmessung, d.h. ein Verfahren und eine nach einem solchen Verfahren arbeitende Vorrichtung zur Bestimmung des Masseflusses durch z.B. eine Röhre möglich.

Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit Prüf- und Arbeitsverfahren betreffen. Einander entsprechende Gegenstände oder Elemente sind in allen Figuren mit den gleichen Bezugszeichen versehen.

Darin zeigen

FIG 1   eine schematisch vereinfachte Darstellung eines ein Medium beinhaltenden Volumens mit daran angekoppelten Messwandlern,

FIG 2   eine andere Darstellung der Situation gemäß FIG 1 zur Erläuterung verwendeter Formelzeichen und

FIG 3   eine schematisch vereinfachte Darstellung einer Vorrichtung zur Bestimmung eines Dichteprofils nach dem Ansatz gemäß der Erfindung.

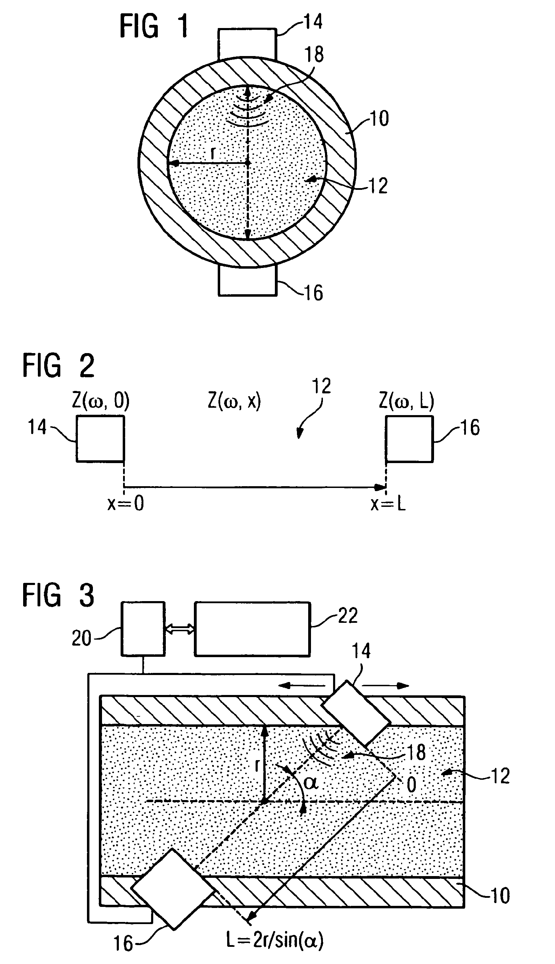

FIG 1 zeigt in schematisch vereinfachter Darstellung als Beispiel für ein Volumen 10, in dem sich ein Medium 12, z.B. eine Flüssigkeit oder ein Gas befindet, oder durch das ein solches Medium 12 strömt, eine Röhre.

Mittels zwei in Bezug auf das Volumen 10 gegenüberliegend angeordneten Wandlern - im Folgenden zur Unterscheidung als Sendewandler 14 und Empfangswandler 16 bezeichnet - wird als Signal ein Impuls definierter Bandbreite, insbesondere ein Ultraschallimpuls 18, durch das Medium 12 gesendet. Eine spektrale Zusammensetzung des Signals ändert sich aufgrund an sich bekannter physikalischer Gesetzmäßigkeiten zumindest mit einer lokalen Dichte - im Folgenden mit dem Formelzeichen $p(x)$ bezeichnet, wobei x für die Ortsabhängigkeit steht - des Mediums 12 . Das durch das Medium 12 beeinflusste Signal kann empfangen und eine danach ermittelte frequenzabhängige akustische Impedanz Z des Mediums 12 kann ausgewertet werden. Die lokale Dichte $p(x)$ des Mediums 12 ergibt sich dabei als Quotient zweier frequenz- und ortsabhängiger Größen, nämlich der akustischen Impedanz $Z(\omega,x)$ einerseits und der Schallgeschwindigkeit $c(\omega,x)$ andererseits, wobei $\omega$ die Frequenz- und x die Ortsabhängigkeit angibt (siehe Gleichungen [1] und [2]).

$$Z(\omega,x) = c(\omega,x)\rho(x) \qquad\qquad [1]$$

$$\rho(x) = \frac{Z(\omega,x)}{c(\omega,x)} \qquad |\forall \omega \qquad\qquad [2]$$

Das Dichteprofil ergibt sich schließlich durch eine Zusammenfassung der ermittelten lokalen Dichten $p(x)$. Die gemäß der vorliegenden Erfindung vorgeschlagene Lösung nutzt entsprechend die Frequenzabhängigkeit der örtlichen Verteilung der akustischen Impedanz $Z(\omega,x)$ und der Schallgeschwindigkeit $c(\omega,x)$.

Die akustische Impedanz $Z(\omega,x)$ determiniert die akustische Last des Wandlers 14, 16. Damit ist es möglich, die akustische Impedanz $Z(\omega,x)$ an einer Grenzfläche zwischen dem Medium 12 und dem das Medium 12 einschließenden Volumen 10 in zwei Punkten, nämlich am Sendewandler 14 sowie am gegenüber liegenden Empfangswandler 16 anhand des abklingenden Anregungssignals zu bestimmen.

FIG 2 zeigt die Verhältnisse gemäß FIG 1 in nochmals vereinfachter Form. Bei einer Anordnung zweier gegenüberliegender Wandler 14, 16 zur Transmissionsmessung mit dem Abstand L können jeweils die frequenzabhängigen Impedanzen $Z(\omega,0)$ und $Z(\omega,L)$ als Randwerte gemessen werden. Für eine Änderung der Impedanz zwischen den Wandlern, im Folgenden mit dem Formelzeichen $dZ(\omega,x)$ bezeichnet, gilt Gleichung [3], wobei $Z(\omega,L) - Z(\omega,0)$ ein Differenzspektrum bezeichnet, welches durch das Integral über die örtliche Verteilung der akustischen Impedanz gegeben ist.

$$\Delta Z(\omega) = Z(\omega, L) - Z(\omega, 0) = \int_0^L dZ(\omega, x)\, dx \qquad [3]$$

Zur Ermittlung von dZ sind verschiedene Ansätze möglich. Die Erfinder haben erkannt, dass sich eine allgemeine Darstellung als Potenzreihe (Gleichung [4]) schreiben lässt, die sowohl die Orts- als auch die Zeitabhängigkeit einer Impedanzänderung berücksichtigt.

$$dZ(\omega, x) = \sum_{p=0}^{P} \sum_{q=0}^{Q} \alpha_{pq} \omega^p x^q \qquad [4]$$

Durch Einsetzen von Gleichung [4] in Gleichung [3] ergibt sich Gleichung [5].

$$\Delta Z(\omega) = \sum_p \sum_q a_{pq} \omega^p \quad \left| a_{pq} = \alpha_{pq} \frac{L^{q+1}}{q+1} \right. \qquad [5]$$

Um eine eindeutige Profilschätzung durchführen zu können, bedarf es einer Kenntnis über die qualitative Ausprägung der Koeffizienten $a_{pq}$ aus Gleichung [5]. Deren qualitative Ausprägung ist gemäß der Erkenntnis der Erfinder spezifisch für den jeweiligen Medientyp (wasser-basiert, öl-basiert, hochflüssig, viskos, etc.) und kann experimentell über eine Variation von L bestimmt werden. Dazu kann vorgesehen sein, dass eine Position, also der Anbringungsort, von zumindest einem der Wandler 14, 16 derart veränderlich ist, dass sich unterschiedliche L ergeben, und dass Transmissionsessungen für Konstellationen mit unterschiedlichem L durchgeführt werden. Dies ist schematisch vereinfacht in FIG 3 dargestellt. Gemäß FIG 3 ist einer der Wandler, z.B. der Sendewandler 14, beweglich angeordnet, so dass seine Position entlang der Längsachse des das Volumen 12 definierenden Rohrs veränderlich ist (angedeutet durch die horizontalen Pfeile). Der andere Wandler, also z.B. der Empfangswandler 16, ist drehbar angeordnet, so dass je nach Position des beweglichen Wandlers 14 beide Wandler 14, 16 stets aufeinander ausgerichtet bleiben. Mit der Änderung der Position des beweglichen Wandlers 14 ändert sich auch der Abstand L und die benötigte Variation ist gegeben. Zusätzlich oder alternativ kann auch vorgesehen sein, dass eine spezielle Geometrie des Volumens 10, z.B. des Rohrs, ausgenutzt wird, indem z.B. bei einem Rohr mit einem elliptischen Querschnitt ein erstes Wandlerpaar 14, 16 entlang der ersten Hauptachse des elliptischen Querschnitts und ein zweites Wandlerpaar 14, 16 entlang der zweiten Hauptachse angebracht wird und Transmissionsessungen für die beiden den jeweiligen Längen der Hauptachsen entsprechenden L durchgeführt werden. Anstelle von einem ersten und einem zweiten Wandlerpaar 14, 16 kann auch nur ein Wandlerpaar verwendet werden, das zunächst in Bezug auf die erste Hauptachse und dann in Bezug auf die zweite Hauptachse am Rohr angebracht wird. Solche Transmissionsessungen können auch unabhängig vom späteren Einsatzort einer nach dem Verfahren arbeitenden Messvorrichtung durchgeführt werden, indem ein Medium untersucht wird, das dem am späteren Einsatzort erwarteten Medium weitgehend entspricht oder zumindest nahe kommt, insbesondere hinsichtlich Kriterien wie oben angegeben (wasser-basiert, öl-basiert, hochflüssig, viskos, etc.). Sobald eine Näherung für die Koeffizienten $a_{pq}$ aus Gleichung [5] vorliegt, können diese in dem Verfahren oder in einer nach dem Verfahren arbeitenden Vorrichtung am jeweiligen eigentlichen Einsatzort verwendet werden.

Allgemein erhält man nach dem Ansatz der Erfinder für die Koeffizienten $a_{pq}$ aus Gleichung [5] die in Gleichung [6] angegebene Struktur, die von einem, wie nachfolgend beschrieben quantitativ zu bestimmenden Parametersatz (Parametervektor) $\theta_z$ abhängt.

$$a_{pq} = f_z(\theta_z, p, q) \quad \left| \theta_z = \begin{pmatrix} ^z\theta_0 & \cdots & ^z\theta_K \end{pmatrix}^T \right. \qquad [6]$$

Mit Gleichung [6] lässt sich Gleichung [5] zur nachfolgend angegebenen Gleichung [7] umschreiben.

$$\Delta Z(\omega) = \begin{pmatrix} \omega^0 & \omega^1 & \cdots & \omega^P \end{pmatrix} \left( \sum_q f_z(\theta_z, 0, q) \quad \sum_q f_z(\theta_z, 1, q) \quad \cdots \quad \sum_q f_z(\theta_z, P, q) \right)^T [7]$$

$$= \begin{pmatrix} \omega^0 & \omega^1 & \cdots & \omega^P \end{pmatrix} \mathbf{F}_z(\theta_z)$$

Mit aufgrund der gemessenen Randwerte Z($\omega$,L) und Z($\omega$,0) bekanntem $\Delta Z(\omega)$ und ebenfalls bekanntem $\omega$ lassen sich die Koeffizienten des Parametervektors $\theta_z$ anhand von N≥P diskreten Frequenzen $\omega_n$ |n=0,..,N und den jeweils gemessenen $\Delta Z(\omega_n)$ darstellen.

Zur Ermittlung des Parametervektors $\theta_z$ ist jetzt gemäß dem Ansatz der Erfinder vorgesehen, dass eine Differenz zwischen der rechten und linken Seite von Gleichung [7] minimiert wird. Ist dies durch geeignete Variation des Parametervektors $\theta_z$ erreicht, ist ein Parametervektor $\theta_z$ gefunden, der die Funktion $f_z$ und damit die quantitative Ausprägung der Koeffizienten $a_{pq}$ aus Gleichung [5] beschreibt.

Mit $\Delta Z_n = \Delta Z(\omega_n)$ und $\Omega_{n,p} = \omega_n^p$ folgt (Gleichung [8]), wobei $\varepsilon(\theta_z)$ ein Maß für den Fehler zwischen der linken und der rechten Seite von Gleichung [7] bezeichnet, $\theta_z$ ein Parametervektor ist und wobei bei minimiertem Fehler die rechte und linke Seite von Gleichung [7] bestmöglich übereinstimmt.

$$\varepsilon(\theta_z) = \left\| \mathbf{F}_z(\theta_z) - \left( \Omega^T \Omega \right)^{-1} \Omega^T \Delta Z \right\|^2 \qquad [8]$$

Mit Hilfe geeigneter, an sich bekannter Optimierungsverfahren (z.B. Gradientenabstiegsverfahren) lässt sich der Fehler über den Parametersatz (Parametervektor $\theta_z$) minimieren (Gleichung [9]).

$$\hat{\theta}_z = \arg\min_{\theta_z}(\varepsilon) \qquad [9]$$

Die geschätzte Verteilung der akustischen Impedanz ergibt sich dann mit auf diese Weise ermitteltem $f_z$ und $\theta_z$ wie in Gleichung [10] angegeben.

$$\hat{Z}(\omega, X) = \int_0^X \sum_{p=0}^P \sum_{q=0}^Q f_z(\hat{\theta}_z, p, q) \omega^p x^q dx = \sum_{p=0}^P \sum_{q=0}^Q f_z(\hat{\theta}_z, p, q) \omega^p \frac{X^{q+1}}{q+1} \qquad [10]$$

Die Beziehung gemäß Gleichung [10] wird weiter unten erneut benötigt.

Für die frequenzabhängige Laufzeit von Schall, also dem vom Sendewandler 14 ausgesandten Signal, auf der Strecke L zwischen den beiden Wandlern 14, 16 gilt die in Gleichung [11] angegebene Beziehung.

$$\Delta t(\omega) = \int_0^L \frac{dx}{c(x, \omega)} \qquad [11]$$

Für die zu integrierende Funktion kann analog zu Gleichung [4] mit Gleichung [12] ein allgemeiner Ansatz gemacht werden.

$$\frac{1}{c(\omega,x)} = \sum_{k=0}^{K}\sum_{l=0}^{L}\beta_{kl}\omega^k x^l \qquad [12]$$

Wie für die Impedanzverteilung muss die qualitative Ausprägung der Koeffizienten $b_{kl}$ durch eine zu bestimmende Struktur - ähnlich der Struktur $f_z$ in Gleichung [6] - beschrieben werden. Für die frequenzabhängige Laufzeit wird dazu die Struktur $f_c$ eingeführt (Gleichung [13]).

$$b_{kl} = \beta_{kl}\frac{L^{l+1}}{l+1} = f_c(\theta_c, k, l) \qquad [13]$$

Die entsprechende Schätzung für die Reziproke der ortsabhängigen Verteilung der frequenzabhängigen Schallgeschwindigkeit ergibt sich somit, also nach entsprechender Minimierung des Fehlers von gemessenen frequenzabhängigen Laufzeiten, in Abhängigkeit von $\theta_c$ gegenüber geschätzten Werten analog zur oben beschrieben Vorgehensweise, wie in Gleichung [14] angegeben.

$$\frac{1}{\hat{c}(\omega,x)} = \sum_{k=0}^{K}\sum_{l=0}^{L} f_c(\hat{\theta}_c, k, l)\omega^k x^l \qquad [14]$$

Damit stehen jetzt aus Gleichung [10] und Gleichung [14] Schätzwerte für Zähler und Nenner der allgemeinen, in Gleichung [2] angegebenen Beziehung zur Verfügung und die Verteilung der Dichte kann entsprechend Gleichung [15] geschätzt werden.

$$\hat{\rho}(\omega,x) = \left[\sum_{p=0}^{P}\sum_{q=0}^{Q} f_Z(\hat{\theta}_Z, p, q)\omega^p \frac{x^{q+1}}{q+1}\right] \cdot \left[\sum_{k=0}^{K}\sum_{l=0}^{L} f_c(\hat{\theta}_c, k, l)\omega^p x^q\right] \qquad [15]$$

Mit der Kenntnis über die örtliche Verteilung der Dichte eines Mediums 12 kann dies für Regeleingriffe oder zur Korrektur eines Messfehlers bei der Erfassung der Dichte infolge der Annahme einer homogenen Verteilung genutzt werden.

Damit lässt sich die Erfindung kurz wie folgt darstellen:

Die Erfindung betrifft ein Verfahren und eine nach dem Verfahren arbeitende Vorrichtung zur Bestimmung eines Dichteprofils eines in einem Volumen 10 befindlichen Mediums 12, mit folgenden Schritten: als Signal wird ein Impuls determinierter Bandbreite, insbesondere ein Ultraschallimpuls 18, durch das Medium 12 gesendet, wobei sich eine spektrale Zusammensetzung des Signals zumindest mit einer lokalen Dichte p(x) des Mediums 12 ändert, wobei sich die lokale Dichte p(x) als Quotient zweier frequenz- und ortsabhängiger Größen, nämlich akustische Impedanz Z($\omega$,x) und Schallgeschwindigkeit c($\omega$,x) ergibt und wobei sich das Dichteprofil durch eine Zusammenfassung der ermittelten lokalen Dichten p(x) ergibt.

Aufbauend auf dem Ansatz gemäß der Erfindung ist eine verbesserte Durchflussmessung, d.h. ein Verfahren und eine nach einem solchen Verfahren arbeitende Vorrichtung zur Bestimmung des Masseflusses durch z.B. eine Röhre möglich. Dazu ist in FIG 3 schematisch vereinfacht eine Verarbeitungseinrichtung 20, also z.B. ein Prozessor oder dergleichen, gezeigt, der zur Ansteuerung des Sendewandlers 14 und zum Empfang von Daten vom Empfangswandler 16 vorgesehen ist. Die Funktionalität der Vorrichtung ergibt sich aufgrund einer Softwareimplementation des beschriebenen Verfahrens gemäß der Erfindung oder einer bevorzugten Ausführungsform, die in einem der Verarbeitungseinrichtung 20 zugeordneten Speicher 22 vorgehalten ist. Durch Zugriff auf den Speicher 22 und die dort hinterlegte Softwareimplementation des Verfahrens führt die Vorrichtung das Verfahren aus. Von der Ausführung des Verfahrens umfasst sind auch evtl. Bewegungen eines oder mehrerer Wandler 14, 16 wie oben beschrieben zur Variation von L.

Mit einer Profilschätzung, also der Bestimmung des Dichteprofils wie oben erläutert, lässt sich nämlich ein bisher kaum vermeidbarer Fehler bei der Bestimmung eines Masseflusses dm/dt = $\rho$ dV/dt reduzieren.

**Patentansprüche**

1.  Verfahren zur Bestimmung eines Dichteprofils eines in einem Volumen (10) befindlichen Mediums (12), wobei ein Signal mittels zwei in Bezug auf das Volumen (10) in einem Abstand L gegenüberliegend angeordneten Ultraschallwandlern - Sendewandler (14) und Empfangswandler (16) - gesendet bzw. empfangen wird und wobei als Signal ein Ultraschallimpuls (18) definierter Bandbreite durch das Medium (12) gesendet wird, dessen spektrale Zusammensetzung sich zumindest mit einer lokalen Dichte p(x) des Mediums (12) ändert, **gekennzeichnet durch** den Schritt, dass die lokale Dichte p(x) als Quotient zweier frequenz- und ortsabhängiger Größen, nämlich akustische Impedanz Z($\omega$,x) und Schallgeschwindigkeit c($\omega$,x), geschätzt wird, wobei p(x) über alle x von 0 bis L das Dichteprofil darstellt und wobei zur Bestimmung des Dichteprofils anhand der akustischen Impedanz Z($\omega$,x) ein Differenzspektrum $\Delta$Z($\omega$) aus der Differenz der akustischen Impedanz Z($\omega$,L) im Bereich des Empfangswandlers (16) und der akustischen Impedanz Z($\omega$,0) im Bereich des Sendewandlers (14) ermittelt wird.

2.  Verfahren nach Anspruch 1, wobei zur Bestimmung des Dichteprofils anhand der akustischen Impedanz Z($\omega$,x) eine frequenz- und ortsabhängige Änderung der akustischen Impedanz dZ($\omega$,x) zwischen den Wandlern (14, 16) ermittelt wird.

3.  Verfahren nach Anspruch 2, wobei der Ermittlung der frequenz- und ortsabhängigen Änderung der akustischen Impedanz dZ($\omega$,x) eine Profil-schätzung zugrunde gelegt wird, in die ein das jeweilige Medium (12) beschreibender Parametervektor $\theta_z$ eingeht.

4.  Verfahren nach Anspruch 3, wobei in die Profilschätzung eine Schätzung des das jeweilige Medium (12) beschreibenden Parametervektors $\theta_z$, also ein geschätzter Parametervektor, eingeht.

5.  Verfahren nach Anspruch 3 oder 4, wobei zur Bestimmung des Dichteprofils anhand der Schallgeschwindigkeit c($\omega$,x) eine Profilschätzung zugrunde gelegt wird, in die ein das jeweilige Medium (12) beschreibender weiterer Parametervektor $\theta_c$, insbesondere ein geschätzter weiterer Parametervektor, eingeht.

6.  Computerprogramm mit durch einen Computer ausführbaren Programmcodeanweisungen zur Implementierung des Verfahrens nach einem der Ansprüche 1 bis 5 wenn das Computerprogramm auf einem Computer ausgeführt wird.

7.  Computerprogrammprodukt, insbesondere Speichermedium, mit einem durch einen Computer ausführbaren Computerprogramm gemäß Anspruch 6.

8.  Messvorrichtung zur Bestimmung eines Dichteprofils eines in einem Volumen (10) befindlichen Mediums (12) mit zwei in Bezug auf das Volumen in einem Abstand L gegenüberliegend angeordneten Ultraschallwandlern - Sendewandler (14) und Empfangswandler (16) -, einer Verarbeitungseinheit (20) zur Ansteuerung des Sendewandlers (14) und zum Empfang von Daten vom Empfangswandler (16) und einem durch die Verarbeitungseinheit (20) ausführbaren Computerprogramm zur Implementierung des Schrittes, dass ein Ultraschallimpuls (18) definierter Bandbreite mittels der zwei Ultraschallwandler gesendet bzw. empfangen wird, **dadurch gekennzeichnet,** **dass** das Computerprogramm ausgebildet ist zur Implementierung des Schritts, dass die lokale Dichte p(x) als Quotient zweier frequenz- und ortsabhängiger Größen, nämlich akustische Impedanz Z($\omega$,x) und Schallgeschwindigkeit c($\omega$,x), geschätzt wird, wobei p(x) über alle x von 0 bis L das Dichteprofil darstellt und wobei zur Bestimmung des Dichteprofils anhand der akustischen Impedanz Z($\omega$,x) ein Differenzspektrum $\Delta$Z($\omega$) aus der Differenz der akustischen Impedanz Z($\omega$,L) im Bereich des Empfangswandlers (16) und der akustischen Impedanz Z($\omega$,0) im Bereich des Sendewandlers (14) ermittelt wird.

**Claims**

1. Method for determining a density profile of a medium (12) located in a volume (10),
a signal being sent and received by means of two ultrasound transducers - transmitting transducer (14) and receiving transducer (16) - arranged opposite one another with reference to the volume (10) at a spacing L, and
an ultrasound pulse (18) of defined bandwidth being sent as signal through the medium (12) the spectral composition of which varies at least with a local density $\rho(x)$ of the medium (12),
**characterized in that**
the local density $p(x)$ is estimated as the quotient of two frequency-dependent and location-dependent variables, specifically acoustic impedance $Z(\omega,x)$ and speed of sound $c(\omega,x)$,
$\rho(x)$ representing the density profile over all x from 0 to L, and
in order to determine the density profile with the aid of the acoustic impedance $Z(\omega,x)$, a difference spectrum $\Delta Z(\omega)$ being determined from the difference between the acoustic impedance $Z(\omega,L)$ in the region of the receiving transducer (16) and the acoustic impedance $Z(\omega,0)$ in the region of the transmitting transducer (14).

2. Method according to Claim 1, in which a frequency-dependent and location-dependent change in the acoustic impedance $dZ(\omega,x)$ between the transducers (14, 16) is determined in order to determine the density profile with the aid of the acoustic impedance $Z(\omega,x)$.

3. Method according to Claim 2, in which the determination of the frequency-dependent and location-dependent change in the acoustic impedance $dZ(\omega,x)$ is based on a profile estimation featuring a parameter vector $\theta_z$ describing the respective medium (12).

4. Method according to Claim 3, in which the profile estimation features an estimate of the parameter vector $\theta_z$ describing the respective medium (12), that is to say an estimated parameter vector.

5. Method according to Claim 3 or 4, in which the determination of the density profile with the aid of the speed of sound $c(\omega,x)$ is based on a profile estimate in which there features a further parameter vector $\theta_c$ describing the respective medium (12), in particular an estimated further parameter vector.

6. Computer program with program code instructions, executable by a computer, for implementing the method according to one of Claims 1 to 5 when the computer program is executed on a computer.

7. Computer program product, in particular storage medium, having a computer program according to Claim 6 which can be executed by a computer.

8. Measuring device for determining a density profile of a medium (12) located in a volume (10), having
two ultrasound transducers - transmitting transducer (14) and receiving transducer (16) - arranged opposite one another with reference to the volume at a spacing L,
a processing unit (20) for driving the transmitting transducer (14) and for receiving data from the receiving transducer (16), and
a computer program executable by the processing unit (20) for implementing the step that an ultrasound pulse (18) of defined bandwidth is transmitted or received by means of the two ultrasound transducers,
**characterized in that**
the computer program is designed for implementing the step in which
the local density $p(x)$ is estimated as a quotient of two frequency-dependent and location-dependent variables, specifically acoustic impedance $Z(\omega,x)$ and speed of sound $c(\omega, x)$,
$\rho(x)$ representing the density profile over all x from 0 to L, and
in order to determine the density profile with the aid of the acoustic impedance $Z(\omega,x)$, a difference spectrum $\Delta Z(\omega)$ being determined from the difference between the acoustic impedance $Z(\omega,L)$ in the region of the receiving transducer (16) and the acoustic impedance $Z(\omega,0)$ in the region of the transmitting transducer (14).

**Revendications**

1. Procédé de détermination d'un profil de densité d'un milieu ( 12 ) se trouvant dans un volume ( 10 ),
dans lequel on émet et on reçoit un signal au moyen de deux transducteurs d'ultrason - transducteur ( 14 ) d'émission et transducteur ( 16 ) de réception - montés en opposition à une distance L par rapport au volume ( 10 ) et

dans lequel on émet comme signal dans le milieu ( 12 ) une impulsion ( 18 ) d'ultrason de largeur de bande définie, dont la composition spectrale se modifie au moins avec une densité p(x) locale du milieu ( 12 ),
**caractérisé par** le stade suivant lequel
on évalue la densité p(x) locale comme un quotient de deux grandeurs dépendantes de la fréquence et de l'emplacement, à savoir impédance $Z(\omega,x)$ acoustique et vitesse $c(\omega, x)$ du son,
dans lequel $\rho(x)$ représente le profil de densité sur tous les x de 0 à L et
dans lequel, pour la détermination du profil de densité au moyen de l'impédance $Z(\omega,x)$ acoustique, on détermine un spectre $\Delta Z(\omega)$ acoustique de différence à partir de la différence entre l'impédance $Z(\omega,L)$ acoustique dans la région du transducteur (16) de réception et de l'impédance $Z(\omega,0)$ acoustique dans la région du transducteur (14) d'émission.

2. Procédé suivant la revendication 1,
dans lequel, pour la détermination du profil de densité au moyen de l'impédance $Z(\omega,x)$ acoustique, on détermine une modification qui dépend de la fréquence et de l'impédance, de l'impédance $dZ(\omega,x)$ acoustique entre les transducteurs ( 14, 16).

3. Procédé suivant la revendication 2,
dans lequel on prend pour base, pour la détermination de la modification, en fonction de la fréquence et de l'emplacement, de l'impédance $dZ(\omega,x)$ acoustique, une évaluation de profil, dans laquelle entre un vecteur $\theta_z$ de paramètre décrivant le milieu ( 12 ) respectif.

4. Procédé suivant la revendication 3,
dans lequel, dans l'évaluation du profil, entre une évaluation du vecteur $\theta_z$ de paramètre décrivant le milieu ( 12 ) respectif, donc un vecteur de paramètre estimé.

5. Procédé suivant la revendication 3 ou 4,
dans lequel, pour la détermination du profil de densité au moyen de la vitesse $c(\omega, x)$ du son, on prend pour base pour la détermination du profil d'étanchéité au moyen de la vitesse $c(\omega, x)$ du son une évaluation du profil, dans laquelle entre un autre vecteur $\theta_c$ de paramètre décrivant le milieu ( 12 ) respectif, notamment un autre vecteur de paramètre estimé.

6. Programme informatique ayant des instructions de code de programme pouvant être réalisé par un ordinateur pour la mise en oeuvre du procédé suivant l'une des revendications 1 à 5, lorsque le programme informatique est réalisé sur un ordinateur.

7. Produit de programme informatique, notamment support de mémoire ayant un programme informatique suivant la revendication 6 pouvant être exécuté par un ordinateur.

8. Dispositif de mesure pour la détermination d'un profil de densité d'un milieu ( 12 ) se trouvant dans un volume ( 10 ), comprenant
deux transducteurs d'ultrason - un transducteur ( 14 ) d'émission et un transducteur ( 16 ) de réception - disposés en opposition à une distance L par rapport au volume,
une unité ( 20 ) de traitement pour l'excitation du transducteur ( 14 ) d'émission et pour la réception de données par le transducteur ( 16 ) de réception,
un programme informatique pouvant être réalisé par l'unité ( 20 ) de traitement pour la mise en oeuvre du stade suivant lequel une impulsion ( 18 ) d'ultrason de largeur de bande définie est émise ou est reçue au moyen des deux transducteurs d'ultrason,
**caractérisé en ce que**
le programme informatique est constitué pour la mise en oeuvre du stade suivant lequel
on estime la densité p(x) locale sous la forme d'un quotient de deux grandeurs dépendant de la fréquence et de l'emplacement, à savoir impédance $Z(\omega, x)$ acoustique et vitesse $c(\omega, x)$ du son,
dans lequel $\rho(x)$ représente le profil de densité sur tous les x de 0 à L et
dans lequel, pour la détermination du profil de densité au moyen de l'impédance $Z(\omega, x)$ acoustique, on détermine un spectre $\Delta Z(\omega)$ acoustique de différence à partir de la différence entre l'impédance $Z(\omega,L)$ acoustique dans la région du transducteur ( 16 ) de réception et de l'impédance $Z(\omega, 0)$ acoustique dans la région du transducteur ( 14 ) d'émission.

## FIG 1

14

18

r

10

12

16

## FIG 2

$Z(\omega, 0)$      $Z(\omega, x)$      12

14

$Z(\omega, L)$

16

$x = 0$      $x = L$

## FIG 3

20    22

14

r   $\alpha$   18

0

12

16    10

$L = 2r/\sin(\alpha)$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006128913 A1
- DE 10108167
- US PS4193291 A

**In der Beschreibung aufgeführte Nicht-Patentliteratur**

- **ANTHONY P. LYONS ; THOMAS H. ORSI.** The Effect of a Layer of Varying Density on High-Frequency Reflection, Forward Loss, and Backscatter. *IEEE Journal of Oceanic Engineering,* Oktober 1998, vol. 23 (4), 411-422